# EUROPEAN PATENT APPLICATION

(11) **EP 3 073 608 A1**
(43) Date of publication of application: **28.09.2016**
(21) Application number: 16162504.1
(22) Date of filing: 28.03.2016
(51) Int. Cl.: H02J 50/10, H02J 50/00, H02J 50/80

(54) **WIRELESS POWER TRANSFER FOR SENSING AND ACTUATING**

(30) Priority: 26.03.2015 GB 201505225
(71) Applicant: Melexis Technologies SA, 2022 Bevaix (CH)
(72) Inventor: LAUTE, Andreas, 98693 Ilmenau (DE); RUFFIEUX, Denis, 1565 Vallon (Fribourg) (CH); STOPHER, Nicholas, Novi, MI Michigan 48375 (US); HO, Meng-Jung, Novi, MI Michigan 48377 (US)
(74) Representative: DenK iP

(57) **Abstract**

A signal control device (100), for use in a vehicle, being installable as a single unit in a component of the vehicle, and configured for simultaneously and/or subsequently performing all of transmitting data signals representative for sensing data from a sensing device (104) for indicating a sensed signal, transmitting and/or receiving actuator commands for actuating a physical element (107) in said component of the vehicle, and powering said signal control device, a sensor linked thereto or a physical element of the component of the vehicle, using wireless data and power communication between said signal control device (100) and a further remote control system.

## Description

### Field of the invention

The invention relates to the field of signal control devices. More specifically it relates to a wireless sensing and control device for transmitting signals and/or commands.

### Background of the invention

Automotive industry is tending to improve automatic and centralized control of security systems and car appliances, such as control of wind and temperature, automatic control of wipers when rain is detected, light and illumination control, etc.

White goods, smart appliances and e-Textiles also require sensing and actuating functions for controlling different parameters, such as temperature, pressure, perspiration etc.

In automatic control, collecting sensor information regarding the state of a system is fundamental, as well as transmission of actuator information. There are situations in which difficulties manifest, for example when automatic control is required on a removable arrangement, such as removable car seats, or in movable parts. In these cases, sensor signal transmission cannot be done via wires. Further problems rise in difficult or rugged environments such as interior of fuel reservoirs, exhaust pipes, etc. In these and other cases, it may be desirable to remove as many wiring and cables as possible, hence wireless technology is applied. In order to ensure proper and stable transmission signals, a battery for powering the transmitter/receiver is necessary, as wiring is outside of the possibilities.

Document US8913952 deals with the situation in which a wireless sensor is embedded in a removable part of a car. In this case, the solution of adding a battery was not seen as desirable, as it requires maintenance on the device, such as changing the battery. The document describes a wireless communication with the sensor in which power is transmitted from the sensor reader to the sensor for sending the signal.

### Summary of the invention

It is an object of embodiments of the present invention to provide a signal control device and a wireless communication assembly allowing easy implementation for signal/data control in a remote component of a vehicle, machine or on a wearable.

It is an advantage of embodiments of the present invention that a signal control device may control actuators and read sensors without the need of an extra local power source

It is an advantage of embodiments of the present invention that less space may be needed, improving embedding of the invention in rugged environments, rotating parts or small places.

In embodiments of the present invention there is provided in a first aspect a signal control device for use in a vehicle, in a machine or on a wearable, the signal control device being installable as a single unit in a component of the vehicle, machine or wearable, and the signal control device being configured for simultaneously and/or subsequently performing all of transmitting data signals representative for sensing data from a sensing device for indicating a sensed signal, transmitting and/or receiving actuator commands for actuating a physical element in said component of the vehicle, machine or wearable, and powering said signal control device, a sensor linked thereto or a physical element of the component of the vehicle, machine or wearable, using wireless data and power communication between said signal control device and a further remote control system such as a further transmitting device This wireless transmission may be performed, according to some embodiments of the present invention, using a single target module for transmitting/receiving data signals, actuator commands and power.

The signal control device may be an automotive signal control device for use in a vehicle.

It is an advantage of embodiments of the present invention that a receiving device may control actuators and read sensors without the need of an extra local power source.

Some embodiments of the present invention comprise a signal control device adapted to receive RFID signals via wireless communication. It is an advantage of embodiments of the present invention that standard communication technology may be used. It is an advantage of embodiments of the present invention that less space may be needed, improving embedding of the invention in rugged environments, rotating parts or small places.

In some advantageous embodiments, standard and inexpensive standard and inexpensive components may be used, such as a RFID sensor tag. It is an advantage of embodiments of the present invention that the RFID sensor tag can be integrated in the control device.

It is an advantage of embodiments of the present invention that standard technology may be used.

Some embodiments of the present invention may further comprise a sensor interface for at least one sensor, advantageously enabling wireless data collection in the signal control device, for example data regarding illumination, such as ambient light, pressure such as seat occupancy detection systems, seat buckle detection systems, or other non-automotive applications. It is a further advantage that the data can be collected from removable parts, such as removable seats or floor mats, or parts in motion such gears or wheels, in which no use of cables is possible or desirable.

Some embodiments of the present invention comprise a signal control device adapted for establishing a bi-directional wireless data communication link, suitable for sending data signals back to a transmitting device via data signals. It is an advantage of embodiments of the present invention that feedback may be sent from the receiving device, allowing adaptation of set of commands, regulation of wireless signal, etc.

The bi-directional link may be an RFID link.

Some advantageous embodiments of the present invention may comprise at least one rectifier for converting wireless power into DC supply, rendering a battery unnecessary for the implementation of the invention, saving energy, space and costs. Additionally no disassembly may be required for maintenance, which is advantageous in rugged environments, complex setups and placements difficult to reach. Some embodiments of the present invention may further comprise a transceiver for receiving Local Interconnect Network commands, which allows control of an external or integrated device using standard commands. The transceiver may further comprise an actuator interface for driving an output. It is an advantage of embodiments of the present invention that an external device may be wirelessly driven, for example an LED arrangement, or an LCD screen display, for example for displaying information (received by the receiving device) from a place not suitable for placement of cables, such the exterior of a car, a door fridge, or other White Goods, Smart Appliances or e-Textiles.

In a second aspect of the present invention, a signal control device is provided for use in a vehicle, in a machine or on a wearable, the signal control device being configured for communicating with a control system in a remote component in the vehicle, machine or wearable, the signal control device being configured for simultaneously and/or subsequently performing all of receiving data signals representative of sensing data from a sensing device in said remote component for indicating a sensed signal, receiving and/or transmitting actuator commands for actuating an element of the remote component of the vehicle, and transmitting a powering signal for powering said control system in a remote component in the vehicle, machine or wearable, a sensor linked to the control system in the remote component or a physical element of the component of the vehicle, machine or wearable, using wireless data and power communication between said signal control device and said control system in said remote component. Some embodiments of the present invention may further comprise transmitting the data signals, commands and power by a single signal.

The signal control device may be an automotive signal control device for use in a vehicle.

It is an advantage of embodiments of the present invention that sensors, actuators and powering may be read and controlled in a single device. It is a further advantage of embodiments of the present invention that interference between signals is reduced or avoided.

Some embodiments of the present invention may comprise a nearfield communication initiator for providing RFID commands, advantageously allowing standard transmitting components and signal protocols to be used.

In some advantageous embodiments, the initiator is further adapted for providing wireless power, hence using less components, reducing manufacturing costs and space.

Some embodiments of the present invention comprise inductive coupling for wireless power transmission. It is an advantage of embodiments of the present invention that the transmission may be short range, only via magnetic fields, further reducing interference.

Some embodiments of the present invention may comprise a transceiver for providing Local Interconnect Network commands. Such embodiments may further comprise providing commands via Serial Peripheral Interface (SPI). It is an advantage of embodiments of the present invention that a set of instructions can be provided to the transmitter for controlling a device.

In embodiments of the present invention there is provided in a third aspect a wireless communication assembly for vehicular applications, suitable for powering, sensing and actuating in remote components of a vehicle, the wireless communication assembly comprising a first signal control device according to embodiments of the first aspect of the present invention, for being installed as a single module in a remote component in the vehicle, and a second signal control device according to embodiments of the second aspect of the present invention, for wirelessly communicating with said first signal control device. It is an advantage of embodiments of the present invention that the assembly combine wireless power transfer, sensing and actuating in a single assembly. It is a further advantage that powering may be done remotely, reducing or avoiding use of cables and power units, advantageously making the system easy to install and easily replaceable.

In some embodiments according to the third aspect of the present invention, the wireless communication for interchanging data signals representative of a sensing signal, for interchanging actuator commands and for powering, is performed using a single signal. It is an advantage of embodiments of the present invention that interference is reduced, as well as the number of receivers and transmitters in the system.

Some embodiments of the wireless communication assembly may further comprise at least one sensor for gathering environmental data, advantageously allowing dynamic surveillance of the status of a rugged environment or of a place out of reach, such as chemical components in an exhaust pipe, detection of ambient light or external temperature, speed of wind, tire pressure, etc. Some advantageous embodiments may comprise at least a Hall sensor. It is an advantage of embodiments of the present invention that it may be suitable for magnetic detection, such as rotor position detection in wheels or gears, belt buckles for removable seats.

Some embodiments of the present invention may be advantageously used for automotive applications. It is an advantage of embodiments of the present invention that control of diverse car appliances and security systems may be centralized.

In embodiments of the present invention there is provided in a fourth aspect a method for controlling a remote component in a vehicle, the method comprising interchanging sensor data from a sensor linked to a remote component in a vehicle, transmitting and/or receiving actuator commands for actuating a physical element in said component of the vehicle, and powering a first signal control device, a sensor linked thereto or a physical element of the component of the vehicle, using wireless communication between said first signal control device and a second signal control device positioned remote from the remote component in the vehicle. Some embodiments of the present invention may comprise powering the first signal control device with the same signal used for transmitting the set of commands. It is an advantage of embodiments of the present invention that the same transmitter and receiver may be used for transmitting power and command data

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 illustrates an embodiment of a signal control device according to a first aspect of the present invention, suitable for actuator control, power reception and signal transmission and reception.
FIG. 2 illustrates an embodiment of a signal control device according to a second aspect of the present invention, suitable for actuator control, power transmission and signal transmission and reception.
FIG. 3 illustrates an embodiment of a wireless communication assembly according to a third aspect of the present invention.
FIG. 4 illustrates an embodiment of a signal control device assembly according to an aspect of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "target", reference is made to a module, such as an integrated circuit, a sensor, a transceiver or any other suitable device capable to receive data signals wirelessly. Target modules may not be limited to only receive data signals, and they may be able to transmit information.

Where in embodiments of the present invention reference is made to "initiator", reference is made to a module such as a transmitter, transceiver, an RFID or any other suitable device capable to send data signals wirelessly. An initiator module is not excluded from receiving and accepting signals from other devices such as from a target module.

In a first aspect, the present invention relates to a signal control device capable to interchange sensor and actuator information in difficult environments, such as devices attached to removable parts, or moving parts of machines, or generally in places in which the presence of cables is not desirable or possible. Embodiments of the present invention allows a receiving device to wirelessly control physical elements (by receiving and transmitting actuator commands), read sensors and wirelessly transmitting their data signals, without the need of an extra local power source or batteries, by providing wireless power transmission from a remote control system. These actions may be performed simultaneously or sequentially, or some may be sequential and others simultaneous. The transmission of (sensing and control) signals and power allows great flexibility of installation of control systems, which may not need regular battery exchange and no need of external wiring, reducing maintenance.

Some embodiments of the signal control device according to the first aspect of the present invention may comprise a single target module for all signals, including receiving or transmitting data signals, actuator commands and even wireless power transmission. This target module may be adapted for receiving Radio-Frequency Identification (RFID) signals. For example a target module may be an RFID sensor tag, or any other suitable device. The present invention may not be limited thereto, and different targets may be used for different transmissions, for example a different sensor (e.g. temperature or infrared sensor) may be used for data and commands.

Some embodiments of the present invention may be connectable to one sensor, via e.g. a rectifier, or a plurality of sensors, via a sensor interface, in order to retrieve information from the environment or from parts of a machine or device. For example, the sensor may be a proximity sensor attached to a movable object, such as a time-flight sensor, or a light sensor for detecting ambient light, or a pressure system for occupancy detection systems (for example, in floor mats or in seats), magnetic sensors such as Hall sensors, portable sensors, systems comprising motion sensors in gears, for example in position detection for wheels, engines or gears. It can also be applied in security systems, for example in seat belts in which the seat is removable, e.g. in seats for children. The present invention is not limited to automobile applications, as it may be used in wearable technology, displays on surfaces in which cables are not desired, alarm systems, etc. Interchange of information does not exclude other manipulations, and the information may be processed using a processor or microprocessor and then transmitted, etc. For example, it may be transmitted to a remote control system, for further processing or performing further actions. Thus, a bi-directional wireless data communication link may be established between said signal control device and a remote control system, which may be a transmitting device. In such embodiments, feedback can be advantageously provided.

Some embodiments of the present invention may comprise an actuator, which may be controlled by actuator commands received via the wireless data communication link. The actuator may comprise other elements and an actuator interface can be used for controlling an output such as a physical element in a machine, a vehicle, etc. Some embodiments may use standard commands for controlling the actuator, for example Local Interconnect Network commands (LIN). The signal control device is suitable for controlling alarm systems, it may be part of automatized control systems, etc. For example, it may be used for automatic control system which may be not need a power source, and only consumes energy upon activation when a transmitter is nearby. It can be also used to control illumination systems, such as ambilight systems when a user enters a vehicle, or displays, or LEDs, etc. The present invention may also be applicable to any setup in which cables are not desirable, such as displays on fridge doors or other household appliances, smart appliances, etc.

As it has been noted, the signal control device may not only receive signals, but also may read sensors, be connectable to actuators, and even transmit signals and commands. The powering of the system is done wirelessly from a remote control system. Some embodiments of the present invention may further comprise a power converter for converting the wireless power into energy usable by the device. Non-exclusive examples comprise a rectifier, for converting the wireless power into DC supply. Such rectifier may be advantageously an internal rectifier, but it may be also external. The rectifier may also have additional functions, such as obtaining information from a sensor interface. Further, certain embodiments of the present invention may require more than one power converter. For example, an extra rectifier may be an external rectifier for powering an output system controlled by the actuator, if required. This has the advantage that a battery may not be necessary for the implementation of the invention, saving energy, space and costs, and no disassembly may be required for maintenance, which is advantageous in rugged environments, complex setups and placements difficult to reach such as exhaust pipes, engines, small parts, etc. The present invention is not limited thereto, and other features may be included, for example a Digital to Analog converter (DAC) or an Analog to Digital converter (ADC).

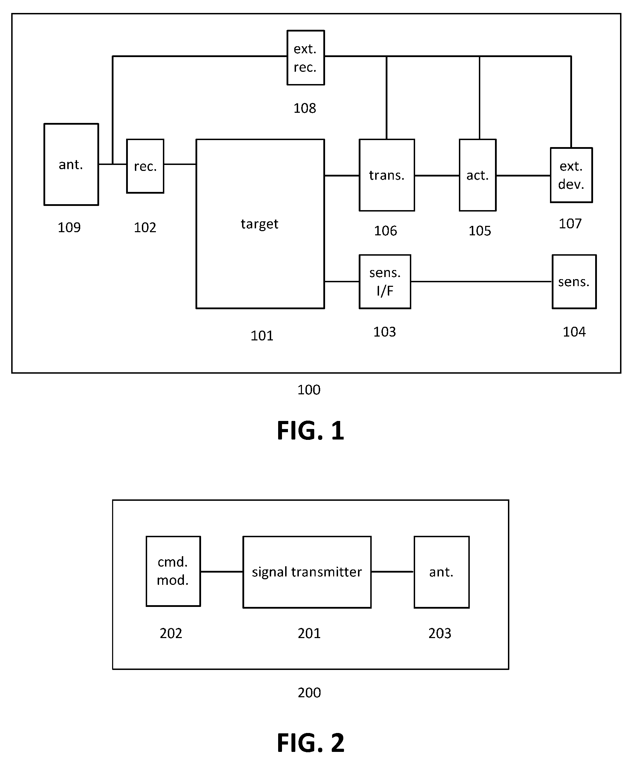

Particular embodiments of the first aspect of the present invention are shown in FIG. 1, in which a signal control device 100 comprising a target module 101 (e.g. a RFID sensor tag) connects to a rectifier 102, the module further comprising a sensor interface 103 for connecting at least one sensor 104 (e.g. a Hall sensor). The target module may further comprise an actuator 105 (for example a transceiver) which may be connected to the target module via the transceiver 106, for example via Serial Peripheral Interface (SPI) connections. SPI buses are suitable for compact and low-power appliances, although the present invention may not be limited thereto and other connections may be used. The actuator 105 may control an external device 107, such a display or a LED arrangement. The external device and the actuator may be powered by a further external rectifier 108, for example. The rectifier 102 and the external rectifier 108 are connected to an antenna 109. The ext. rectifier may get energy from the transmitter via wireless power transfer.

In a second aspect of the present invention, a signal control device is provided, the signal control device configured for communicating with a remote component, such as a component comprising a control system according to embodiments of the first aspect of the present invention. Embodiments according to the second aspect of the present invention may, sequentially and/or simultaneously, receive data from a sensing device in a remote component, receive and transmit actuator commands for actuating an element in a remote component, and transmit powering signal for powering the control system in a remote component. Each of these actions are performed using wireless data and power communication between the signal control device and the signal control system in the remote component. Thus, a single device may read data of sensors, control actuators and provide power. In some embodiments of the present invention, not only a single device may perform all these actions, but also a single signal may transmit the commands, data and power. The single signal may comprise radio signals, such as wave packets or modulated signals, etc., hence reducing electromagnetic compatibility issues or even avoiding interference.

Some embodiments of the present invention comprise a signal transmitter, such as an RFID initiator, which may provide a standard protocol of wireless signal, for example RFID commands. The initiator may also provide wireless power, for example via inductive coupling. Using inductive coupling, the transmission may be short range, only via magnetic fields, further reducing interference. It may also use the same wireless signal that transmits the RFID commands. This way, embodiments of the present invention may be made compact and save components, hence reducing costs.

Embodiments of the second aspect of the present invention may comprise a module for providing commands, such as commands for wireless control of a remote actuator. The module may be an integrated circuit, a programmable module, These commands may be sent wirelessly via the initiator.

Embodiments of the second aspect of the present invention may comprise other features, such as a power source for powering an initiator, or a memory module (e.g. EPROM, EEPROM) for storing and/or introducing commands for wirelessly controlling a remote component. It may even comprise a further sensor, for example a sensor providing a comparative signal which may be wirelessly sent to a device according to the first aspect of the present invention, for example for signal correction or compensation.

A schematic representation of an embodiment according to the second aspect of the present invention is shown in FIG. 2. A signal control device 200 comprises a signal transmitter 201 (e.g. an initiator, such as an RFID reader) connects to a command module 202, for example a LIN transceiver, via a SPI connection. An antenna 203 connects to the transmitter 201. In those embodiments in which the module is equipped with a LIN transceiver, the transceiver may provide Local Interconnect Network (LIN) commands to the signal transmitter 201 via an SPI.

In a third aspect of the present invention, a wireless communication assembly is provided between a first signal control device according to embodiments of the first aspect of the present invention and a second signal control device according to embodiments of the second aspect of the present invention. The first signal control device is installed as a single module in a remote component, e.g. in a movable or removable component. The second component wirelessly communicates with the first control device, and transmits power to it. This assembly combines wireless power transfer, sensing and actuating, reducing the use of cables and extra power units. Hence, the installation of the system according to embodiments of the third aspect of the present invention is easy, maintenance is reduced, and damaged elements may be easily replaced. Some embodiments of the present invention may combine all the signal transferal in a single signal, hence the signal may carry any of, or all of, data from a sensor, actuator commands and power, making the use of several receivers and transmitters not necessary and further reducing interference.

Some embodiments of third aspect of the present invention may comprise at least one sensor, such as Hall sensors, sensors for chemical analysis, speed or position sensors, optical or light sensors, proximity sensors, tire pressure sensors, gear or wheel rotation sensors, etc. This allows dynamic surveillance of the status of a machine, device or environment, even in rugged conditions or in places hard to reach such the interior of engines or exhaust pipes. Further, there may be feedback communication between the first signal control and the second signal control devices, for example by transmitting information gathered from a sensor from a target module to a initiator module. This way, actuator commands stored in the command module (e.g. in a lookup table) and signal may be regulated and adapted as a response to a change in the sensor.

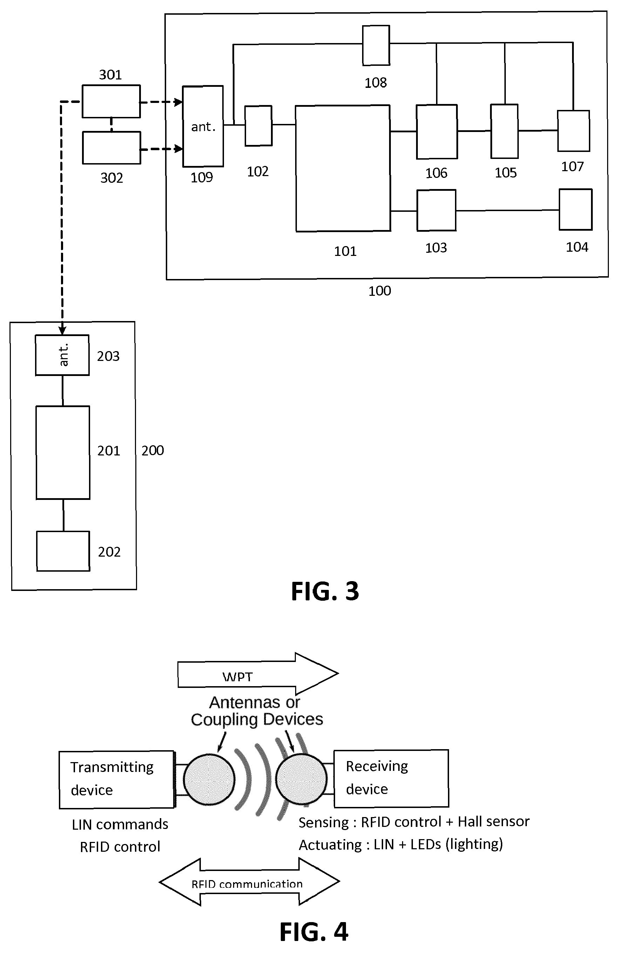

FIG. 3 shows schematically shows an assembly 300 according to embodiments of the present invention, comprising a first signal control device 100 and a second signal control device 200. The first signal control device 100 may comprise a receiving module such as a target 101 (e.g. an RFID tag) that receives wireless power and actuator commands (such as RFID commands) from the signal transmitter 201 (e.g. an RFID reader). The target connects its sensor interface 103 to at least a sensor 104, for example a plurality of sensors, for example at least one Hall sensor. An internal module 102 for transforming the wireless signal (received by the target module 101) in energy may be featured in the target 101, or may be external. The target 101 may be connected to a sensor interface 103 which may obtain information from one or more sensors 104. The target 101 may comprise connections 106, such as SPI connections, which are connectable to an LIN actuator 105, which may be a transceiver. The actuator 105 may drive an external device 107 via LIN commands received from the command module 202 (which may also be a transceiver) via wireless data transfer. For example, the present assembly may be applied to a floor mat with lightning features, and the actuator 105 may control the LEDs or a display. The second signal control device 200 may comprise a signal transmitter 201, such as an initiator (e.g. an RFID) connected via connections 203 such as SPI to a command module 202, which may be a LIN transceiver. The transceiver may store commands in a memory module, and may send LIN commands to the initiator 201, which instructs via RFID signal 301 communication through the target 101 to the actuator 105. The sensor target 101 may also communicate with the initiator via RFID signal 301 (hence, the arrows of the dashed line indicating signal transmission are shown as double-headed). The RFID signal may be used to obtain electric power 302 to power the control device 100, for example the internal rectifier 102 may transform the wireless signal to DC. An external rectifier 108 may also power the actuator 105, the transceiver 106 and the external device 107, although they may also be powered by the internal rectifier.

In a fourth aspect of the present invention, a method for controlling a remote component is provided. This method comprises interchanging sensor data from a sensor linked to a remote component, for example sending and receiving sensor data to a first signal control device. It further comprises transmitting and/or receiving actuator commands for actuating a physical element, for example a component in a vehicle, and also wirelessly powering a first signal control device, a sensor connected to it, and/or a physical element of the component of the vehicle. In advantageous embodiments of the fourth aspect of the present invention, the signal used for transmitting the set of commands and the wireless signal used for powering the first signal control device is the same. The signal transmission between the antennas or coupling devices may comprise inductive coupling technology to wirelessly transfer energy from different elements of the device. The communication between different elements within a device (e.g. the antennas and the transceivers) may be done by LNI protocol via SPI buses. Converting radiated signal into power may be done through the same antennas, comprising at least one rectifier and/or suitable device (such a coupled DAC, etc).

The present invention may include several devices, allowing communication between them. For example, several devices according to the first embodiment (comprising actuators and sensors) may be powered by a single device according to the second embodiment, which may also perform wireless control simultaneously over the actuators of the first embodiment of the present invention, for example as a response of the signals obtained by their sensors. In turn, a single device according to the first embodiment may be wirelessly connectable to a plurality of devices according to the second aspect of the present invention, for example a single removable floor mat comprising sensors and actuators may be compatible with several signal control devices, allowing the use in different situations (e.g. different cars).

Embodiments of the wireless communication assembly may be advantageously used in automotive applications, for example it may be applied to car appliances and security systems, reducing electricity consumption and avoiding the use of connections. In an exemplary embodiment, a removable seat in a car may comprise a signal control device which is powered upon being in the proximity of the power transmitting control device. A Hall sensor may send a signal to the power transmitting control device via the RFID sensor tag, informing from a certain situation (e.g. the belt seat is not buckled). The RFID reader may detect the signal and send it to the command module, which sends a command signal via LIN back to the RFID reader. The RFID reader sends the signal, instructing the control device to perform an action (e.g. light up an alarm bulb, such a LED) via the actuator. The present invention is not limited to said example, and further features may be added. Continuing with the present exemplary embodiment, a second pressure sensor may be included, which may determine another situation (the removable car seat is empty). The signal would be sent to the command module, which may prioritize the signal from the pressure sensor over the Hall sensor (hence determining that the alarm bulb may not be lit).
By way of illustration, embodiments of the present invention not being limited thereto, an example of a signal control device assembly is shown with reference to FIG. 4. In one example, shown in FIG. 4, the assembly of signal control devices is based on an inductive coupling technology to wirelessly transfer energy from a power transmitting device (Initiator) to the receiving device (target). The target is equipped with sensing and/or actuating functions that can be configured by the initiator. A bi-directional wireless data communication link is established through the same wireless link. The below description refers to an exemplary implementation. The transmitting control device comprises an RFID/NFC reader that provides wireless power and RFID commands to the receiving device. The receiving device comprises a LIN transceiver that provides LIN commands via SPI. The receiving device comprises also an RFID sensor tag that receives wireless power and RFID commands. A sensor interface can be connected to various sensors. A Hall sensor also is provided that can be employed for seat belt buckle detection. An internal rectifier to convert wireless power into DC supply for its own use also is provided. The signal control device also reads out the sensors and communicates the sensor values via RFID commands to a further signal control device. For actuating purposes (e.g. floor mat lighting), the signal control device drives LEDs according to the LIN commands it receives from the other signal control device. An external rectifier converts wireless power to DC supply for driving the signal control devices and the LEDs.

## Claims

1. A signal control device (100) for use in a vehicle, in a machine or on a wearable, the signal control device (100) being installable as a single unit in a component of the vehicle, machine or wearable and the signal control device (100) being configured for simultaneously and/or subsequently performing all of
- transmitting data signals representative for sensing data from a sensing device for indicating a sensed signal,
- transmitting and/or receiving actuator commands for actuating a physical element in said component of the vehicle, machine or wearable, and
- powering said signal control device, a sensor linked thereto or a physical element of the component of the vehicle, machine or wearable
using wireless data and power communication between said signal control device (100) and a further remote control system.

2. A signal control device (100) according to claim 1, the signal control device (100) further comprising a single target module (101) for receiving/transmitting data signals, actuator commands and power via wireless communication.

3. A signal control device (100) according to any of the previous claims, wherein the signal control device (100) is an automotive signal control device for use in a vehicle.

4. A signal control device (100) according to any of the previous claims, wherein the signal control device comprises an RFID sensor tag (101) and/or a sensor interface (103) for at least one sensor and/or wherein said signal control device (100) is adapted for establishing a bi-directional wireless data communication link, suitable for being configured by data signals and sending data signals back to a transmitting device via data signals.

5. A signal control device (100) according to any of the previous claims, further comprising a rectifier (102) for converting wireless power into DC supply and/or wherein the signal control device comprises a controller with an actuator interface for driving an output.

6. A signal control device (200) for use in a vehicle, in a machine or on a wearable, the signal control device (200) being configured for communicating with a control system in a remote component in the vehicle, in a machine or on a wearable, the signal control device being configured for simultaneously and/or subsequently performing all of
- receiving data signals representative of sensing data from a sensing device in said remote component for indicating a sensed signal,
- receiving and/or transmitting actuator commands for actuating an element of the remote component of the vehicle, the machine or on the wearable, and
- transmitting a powering signal for powering said control system in a remote component in the vehicle, the machine or on the wearable, a sensor linked to the control system in the remote component or a physical element of the component of the vehicle, the machine or on the wearable,
using wireless data and power communication between said signal control device and said control system in said remote component.

7. A signal control device (200) according to claim 6 further comprising a near field communication initiator for providing RFID commands.

8. A signal control device (200) according to claim 7 wherein the initiator is further adapted for providing wireless power and/or wherein the initiator is further adapted for providing wireless power transmission via inductive coupling.

9. A signal control device (200) according to any of claims 6 to 8, wherein the signal control device (200) is an automotive control device for use in a vehicle and/or wherein the signal control device (200) further comprising a transceiver for providing Local Interconnect Network commands.

10. A signal control device (200) according to claim 9, wherein the signal control device (200) comprises a LIN transceiver wherein the LIN transceiver provides commands via Serial Peripheral Interface to other circuit components.

11. A wireless communication assembly (300) for vehicular applications, for machines, or for wearables suitable for powering, sensing and actuating in remote components of a vehicle, of a machine or of a wearable, the wireless communication assembly (300) comprising a first signal control device according to claim 1 for being installed as a single module in a remote component in the vehicle, the machine or the wearable and/or a second signal control device according to claim 8 for wirelessly communicating with said first signal control device.

12. A wireless communication assembly (300) according to claim 11 wherein said wireless communication (300) for interchanging data signals representative of a sensing signal, for interchanging actuator commands and for powering is performed using a single signal.

13. A wireless communication assembly (300) according to any of claims 11 to 12, the wireless communication assembly (300) further comprising at least one sensor for gathering environmental data or the wireless communication assembly comprises at least one Hall sensor.

14. A wireless communication assembly (300) according to any of claims 11 to 13 for automotive applications.

15. A method for controlling a remote component in a vehicle, the method comprising
- interchanging sensor data from a sensor linked to a remote component in a vehicle,
- transmitting and/or receiving actuator commands for actuating a physical element in said component of the vehicle, and
- powering a first signal control device, a sensor linked thereto or a physical element of the component of the vehicle,
using wireless communication between said first signal control device and a second signal control device positioned remote from the remote component in the vehicle.
